# EUROPÄISCHE PATENTSCHRIFT

(11) **EP 2 899 576 B1**
(45) Veröffentlichungstag und Bekanntmachung des Hinweises auf die Patenterteilung: **31.10.2018**
(21) Anmeldenummer: 14152337.3
(22) Anmeldetag: 23.01.2014
(51) Int. Cl.: G02B 6/38, H02G 15/013

(54) **Montagevorrichtung für eine Spleissmuffe**
Mounting device for a splice closure
Appareil de montage pour un boîtier d'épissures

(43) Veröffentlichungstag der Anmeldung: 29.07.2015
(73) Patentinhaber: Hauff-Technik GmbH & Co. KG, 89568 Hermaringen (DE)
(72) Erfinder: Heck, Martin, 89447 Zöschingen (DE); Kurz, Ralf, 89537 Giengen (DE)
(74) Vertreter: Szynka, Dirk

(56) Entgegenhaltungen:
- EP-A1- 0 073 748
- WO-A1-2004/051338
- GB-A- 2 213 329
- US-A- 5 745 633
- US-A- 5 778 122
- US-B1- 6 608 254

## Beschreibung

Die vorliegende Erfindung betrifft eine Montagevorrichtung für eine Spleissmuffe, und zwar zur Montage eines durch einen Durchlass der Spleissmuffe geführten Kabels.

Eine Spleissmuffe kann beispielsweise im Erdreich vergraben oder in einem Schacht montiert dazu vorgesehen sein, dass ein mehradriges Kabel eingeführt und darin in eine Mehrzahl Adern beziehungsweise Aderbündel aufgetrennt wird, wobei diese dann jeweils für sich herausgeführt werden. Mit der Spleissmuffe kann also beispielsweise an einem Verzweigungspunkt ein mehradriges Kabel aufgetrennt werden und können so beispielsweise in einem Straßenzug für die einzelnen Haushalte Kabel herausgeführt werden.

Eine Herausforderung kann darin bestehen, innerhalb der Spleissmuffe, also dort, wo die Kabel aufgetrennt beziehungsweise verbunden werden, ein nach außen abgedichtetes Volumen zur Verfügung zu stellen.

Die US 5,778,122 zeigt eine Einführung für eine Spleissmuffe für Glasfaserkabel. Dabei ist distal der Spleissmuffe ein Dichteinsatz aus Silikon vorgesehen, der einen äußeren Mantel des Kabels umschließt. Direkt daran anschließend, der Spleissmuffe proximal ist an das Kabel ein Stopfen angegossen, in welchem das Kabel aufgedröselt ist und so auszugssicher angeordnet sein soll.

Die US 6,608,254 B1 betrifft eine Dichtanordnung zum Dichten eines Kabels, das im Unterwasserbereich in ein Luftvolumen eingeführt wird, was eine hohe Druckdifferenz ergibt. Die Dichtanordnung weist mehrere axial aufeinanderfolgend am Kabelmantel angeordnete Dichtelemente auf.

Die GB 2 213 329 A betrifft eine Kabelbuchse mit zwei Dichtelementen, wovon eines gegen den Kabelmantel und das andere gegen die Kabelkern dichtet.

Der vorliegenden Erfindung liegt das Problem zugrunde, eine besonders vorteilhafte Montagevorrichtung zur Montage eines durch einen Durchlass der Spleissmuffe geführten Kabels anzugeben.

Erfindungsgemäß löst diese Aufgabe eine Montagevorrichtung gemäß Anspruch 1.

Bevorzugte Ausführungsformen finden sich in den abhängigen Ansprüchen und der nachstehenden Beschreibung, wobei nicht immer im Einzelnen zwischen der Darstellung der Montagevorrichtung, einer Spleissmuffe mit einer solchen und entsprechender Verfahrens- beziehungsweise Verwendungsaspekte unterschieden wird; jedenfalls implizit ist die Offenbarung hinsichtlich sämtlicher Kategorien zu lesen.

Die erfindungsgemäße Montagevorrichtung ist also mit mindestens zwei Verformungselementen versehen, die sich hinsichtlich ihrer Funktion unterscheiden, es kann dann also bei der Montage des Kabels in der Durchlassöffnung der Spleissmuffe jedes der beiden Verformungselemente eine andere Funktion übernehmen. Die beiden Verformungselemente können dazu beispielsweise unterschiedliche Materialeigenschaften haben, sodass etwa das eine Verformungselement einen sicheren Halt des Kabels gewährleisten und das andere eine gute Abdichtung auch bei tiefen Temperaturen sicher stellen kann (siehe nachstehend im Detail).

Andererseits können sich in ihrer Funktion unterscheidende Verformungselemente jedoch beispielsweise auch aus demselben Material mit denselben Materialeigenschaften vorgesehen sein und kann sich die unterschiedliche Funktion durch einen unterschiedlichen Durchmesser der jeweils für dasselbe Kabel vorgesehenen Durchgangsöffnung ergeben. Das "Kabel" kann nämlich auch eine in einem Schutzrohr geführte Kabelleitung sein, und es kann dann das zweite Verformungselement das Schutzrohr halten und das erste Verformungselement zur Kabelleitung dichten (siehe nachstehend im Detail). Mit "unterschiedlicher Funktion" kann also beispielsweise mit unterschiedlichen Durchgangsöffnungsdurchmessern (für dasselbe Kabel) und/oder mit unterschiedlichen Materialeigenschaften, insbesondere aus unterschiedlichen Materialien, meinen.

Die Montagevorrichtung kann also vorteilhafterweise mehrere Funktionalitäten vereinen. Dabei ist sie insofern als integrales Teil vorgesehen, als die verspannten Verformungselemente auch unabhängig von der dichtenden Anlage der Verformungselemente am Kabel zueinander in einer Relativposition festgelegt sind. Die Verformungselemente sind dann also zusätzlich zur jeweiligen Verspannung am Kabel in der Relativposition zueinander gehalten, etwa mit einem nachstehend im Detail erläuterten Befestigungselement. Indem die Verformungselemente so sicher beisammen angeordnet sind, können auch die unterschiedlichen Funktionen zuverlässig kombiniert werden, ist also beispielsweise dann auch ein Schutzrohr sicher relativ zur Kabelleitung gehalten. Die Relativpostion der Verformungselemente kann dabei sogar schon festgelegt sein, bevor beide Verformungselemente verspannt sind, besonders bevorzugt sogar dann, wenn beide nicht verspannt sind (siehe unten im Detail).

Es kann bevorzugt sein, dass das zweite Verformungselement zum Dichten gegen die Außenmantelfläche eines Schutzrohres und das erste Verformungselement zum Dichten gegen eine in dem Schutzrohr geführte Kabelleitung vorgesehen ist. Vorzugsweise sind die beiden Verformungselemente dabei auch derart gegeneinander gedichtet, dass in ihrem verspannten Zustand das Ende des Schutzrohres gedichtet ist. Die beiden Verformungselemente müssen dazu nicht zwingend unmittelbar aneinander grenzen, sondern es kann beispielsweise bezogen auf die Kabelrichtung dazwischen auch ein Abstandshalter vorgesehen sein. Dichten die beiden Verformungselemente gegen letzeren, ist dann auch das Schutzrohr gedichtet. Besonders bevorzugt sind die beiden Verformungselemente über ein nachstehend weiter im Detail erläutertes Spannelement zueinander gedichtet, findet also jedes der Verformungselemente am selben Spannelement eine dichtende Anlage, etwa das eine Verformungselement mit seiner Außenmantelfläche und das andere mit einem Stirnseitenbereich.

Vorzugsweise unterscheiden sich die Verformungselemente einer für ein Schutzrohr mit Kabelleitung darin vorgesehenen Montagevorrichtung im Durchmesser der jeweiligen, demelben Kabel zugeordneten Durchgangsöffnung. Es kann also die für das Schutzrohr vorgesehene Durchgangsöffnung beispielsweise einen um mindestens 20 %, vorzugsweise mindestens 40 %, weiter bevorzugt mindestens 60 %, größeren Durchmesser als die Durchgangsöffnung im ersten Verformungselement haben. Die "demselben Kabel" zugeordneten Durchgangsöffnungen fluchten in Kabelrichtung. Soweit im Rahmen dieser Offenbarung von einem "Durchmesser" die Rede ist, soll dies nicht zwingend eine Kreisform implizieren, sondern ist damit im Allgemeinen der Mittelwert aus kleinster und größter Erstreckung gemeint, der im bevorzugten Fall der Kreisgeometrie dem Kreisdurchmesser entspricht.

Soweit das Kabel eine in einem Schutzrohr geführte Kabelleitung ist, füllt die Kabelleitung das Schutzrohr nicht vollständig aus, sondern etwa in einem zur Kabelrichtung senkrechten Schnitt betrachtet maximal 90 %, 80 %, 70 %, 60 % bzw. 50 % des Innenvolumens des Schutzrohres; die Kabelleitung ist also vergleichsweise lose im Schutzrohr geführt. Egal ob in einem Schutzrohr geführt oder nicht, kann eine Kabelleitung mehradrig sein, also etwa mehrere LWL-Adern beinhalten, die beispielsweise von einem gemeinsamen Hülsmantel beisammen gehalten werden (der auch Teil der Kabelleitung ist); in einem zur Kabelrichtung senkrechten Schnitt betrachtet könne die Adern ein Innenvolumen des Hülsmantels beispielsweise zu mindestens 60 %, 70 %, 80 % beziehungsweise 90 % ausfüllen.

Bei einer erfindungsgemäßen Montagevorrichtung kann sich generell aufgrund der "zweistufigen" Verformungselemente auch ein Vorteil die Fixierung beziehungsweise Auszugssicherung des Kabels betreffend ergeben. Idealerweise kann ein Kabel dann allein durch die Verformungselemente gehalten werden, muss also beispielsweise nicht eine gesonderte Befestigungsader im Kabel (insbesondere in einer Kabelleitung) geführt werden, die dann erst einer Dichtung des Kabels zur Spleissmuffe nachgeordnet befestigt würde, also innerhalb der Spleissmuffe, zum Beispiel mit einer Spannschelle. Vorzugsweise können also allein die Verformungselemente das Kabel relativ zur Spleissmuffe in Position halten und gegen ein Herausziehen sichern.

Auch in dieser Hinsicht kann für das erste und/oder das zweite Verformungselement eine jeweils in Kabelrichtung genommene Mindestlänge bevorzugt sein, etwa von in dieser Reihenfolge zunehmend bevorzugt mindestens 22 mm, 24 mm, 26 mm, 28 mm beziehungsweise 29 mm; mögliche Obergrenzen liegen (davon unabhängig) beispielsweise bei 50 mm, 40 mm beziehungsweise 35 mm.

Generell soll eine Bezugnahme auf "die beiden" Verformungselemente nicht das Vorhandensein eines weiteren beziehungsweise weiterer Verformungselemente als Teil der Montagevorrichtung ausschließen, könnten also in Kabelrichtung aufeinanderfolgend auch eine Vielzahl Verformungselemente am selben Kabel derselben Durchlassöffnung zugeordnet vorgesehen sein. Bevorzugt ist indes eine Montagevorrichtung mit genau zwei Verformungselementen.

Generell sind das erste und das zweite Verformungselement in Kabelrichtung aufeinanderfolgend angeordnet, wobei die Kabelrichtung entlang einer Geraden weist, welche folglich die beiden Verformungselemente durchsetzt. Zwischen den beiden Verformungselementen verläuft das Kabel insoweit knick- beziehungsweise biegungsfrei (anders als in der Spleissmuffe).

Bei einer bevorzugten Ausführungsform unterscheiden sich das erste und das zweite Verformungselement im jeweiligen Verformungselementmaterial insoweit, als die beiden Verformungselementmaterialien eine unterschiedliche Shore-Härte haben; es ist die des einen also beispielsweise um mindestens 5 %, in dieser Reihenfolge zunehmend bevorzugt mindestens 10 %, 15 % , 20 %, 25 %, 30 % beziehungsweise 40 %, größer als die des anderen. Vorzugsweise ist die Shore-Härte des Materials des ersten Verformungselements, also des der Spleissmuffe proximalen Verformungselements, geringer; das zweite (distale) Verformungselement kann das Kabel dann beispielsweise fester halten, etwa auch gegen ein Verdrehen oder Verkippen sichern.

Das erste Verformungselement kann hingegen beispielsweise eine gute Dichtigkeit herstellen, etwa auch über einen weiten Temperaturbereich, insbesondere auch bei Temperaturen unter dem Gefrierpunkt. Auch in dieser Hinsicht kann die mittels eines Befestigungselements integrale Ausgestaltung der Verformungselemente Vorteile bieten, weil so nämlich beispielsweise im Wesentlichen nur das eine Verformungselement kräftetragend gegenüber dem Kabel verspannt werden muss, damit aber zugleich das andere Verformungselement in seiner Relativposition gegenüber dem Kabel festgelegt ist.

Das erste Verformungselement kann beispielsweise aus einem Silikonmaterial vorgesehen sein, vorzugsweise aus Silikon bestehen. Außerdem könnte das erste Verformungselement auch aus einem Gel auf Polyurethan-Basis vorgesehen sein. Ein erstes Verformungselement auf Grundlage eines Gels kann sogar derart niedrige Shore-Härten haben, dass Shore 000 anstelle von Shore A (siehe unten) gemessen werden kann; insofern kann die Shore-Härte beispielsweise bei mindestens 30 Shore, 35 Shore beziehungsweise 40 Shore (jeweils 000) liegen; mögliche Obergrenzen können - im Falle eines Gelkörpers - etwa bei 60 Shore, 50 Shore beziehungsweise 45 Shore (jeweils 000) liegen.

Das zweite Verformungselement kann beispielsweise aus Ethylen-Propylen-DienKautschuk (EPDM)-Material vorgesehen sein, vorzugsweise aus EPDM bestehen. Ferner wäre auch NBR Kautschuk (Nitril-Butadien-Kautschuk) möglich.

Das erste Verformungselement kann etwa eine Shore-Härte (Shore A, in der gesamten Offenbarung, soweit nicht anders angegeben, siehe oben) von mindestens 22 Shore, vorzugsweise mindestens 24 Shore, weiter bevorzugt mindestens 26 Shore haben; davon unabhängig liegen mögliche Obergrenzen beispielsweise bei höchstens 30 Shore, vorzugsweise höchstens 28 Shore. Möglich ist selbstverständlich auch eine Kombination aus den vorstehend genannten Untergrezen (30 Shore, 35 Shore, 40 Shore, jeweils 000) und den Obergrenzen aus dem vorherigen Satz (in Shore A angegeben). Das zweite Verformungselement kann beispielsweise eine Shore-Härte von mindestens 34 Shore, in dieser in Folge zunehmend bevorzugt mindestens 36 Shore, 38 Shore beziehungsweise 39 Shore, haben; davon unabhängig liegen mögliche Obergrenzen beispielsweise bei in dieser Reihenfolge zunehmend bevorzugt höchstens 46 Shore, 44 Shore, 42 Shore beziehungsweise 41 Shore.

Generell ist ein Verformungselement vorzugsweise ein jeweils gesondertes, besonders bevorzugt für sich monolithisches Teil. "Monolithisch" meint im Rahmen dieser Offenbarung ohne Materialgrenze zu einem anderen Material beziehungsweise einem Materialbereich anderer Herstellungsgeschichte. Ein monolithisches Teil wird also in einem geformt, beispielsweise durch Gießen oder Pressen in einem entsprechenden Formwerkzeug. Dabei ist selbstverständlich eine Nachbehandlung möglich, kann also beispielsweise die Durchgangsöffnung für das Kabel auch nachträglich eingebracht werden, was ja nichts am monolithischen Charakter des verbleibenden Verformungselements ändert (ausgeschlossen ist indes beispielsweise ein vollständiges Durchtrennen, das ja zu einer Mehrstückigkeit führt).

Im Allgemeinen könnten die beiden Verformungselemente etwa auch einstückig vorgesehen sein, also etwa aus zwei unterschiedlichen Materialien aneinander angeformt sein; vorzugsweise sind die Verformungselemente jedoch zueinander mehrstückig, also separate, bei zerlegter Montagevorrichtung jeweils für sich einzeln handhabbare Teile. Im Allgemeinen kann ein Verformungselement sogar auch für sich wiederum mehrstückig sein, etwa aufgrund eines sich in Kabelrichtung und einer Richtung senkrecht dazu erstreckenden Schlitzes zweigeteilt (oder einer Mehrzahl Schlitze mehrgeteilt); das Verformungselement kann so also aufgeklappt und auf ein Kabel gesetzt werden, ohne dass dieses hindurch gefädelt werden muss. Bevorzugt sind indes zueinander mehrstückige Verformungselemente, die jeweils für sich einstückig, vorzugsweise monolithisch, sind.

In bevorzugter Ausgestaltung ist als Teil des Befestigungselements, das die Verformungselemente in der Relativposition festlegt, ein Spannbolzen vorgesehen, vorzugsweise ein Schraubbolzen (dessen Gewinde sich beispielsweise nur endseitig oder auch über die gesamte Länge erstrecken kann). Vorzugsweise ist dieser Spannbolzen zugleich zum Spannen von zumindest einem der Verformungselemente vorgesehen, vorzugsweise zum Spannen genau eines Verformungselements. Dabei kann der Befestigungselement-Spannbolzen auch schon vor dem Verspannen des Verformungselements dieses in seiner Relativposition zur übrigen Montagevorrichtung festlegen, wenn nämlich etwa im Falle eines Schraubbolzens dieser bereits in ein Gewinde greift, das Anziehen jedoch noch keine Kompression des Verformungselements bewirkt.

Der Befestigungselement-Spannbolzen stellt dann also beispielsweise eine Wirkverbindung zwischen an den beiden Stirnseiten des ersten Verformungselements angeordneten Spannplatten her und ist zugleich zumindest mittelbar mit dem zweiten Verformungselement verbunden, vorzugsweise über ein Spannelement, das eine an der der Spleissmuffe zugewandten Stirnseite des zweiten Verformungselements angeordnete Spannplatte zur Verfügung stellt beziehungsweise eine Anlage für eine solche zur Verfügung stellt.

Generell ist bevorzugt, dass für mindestens eines der beiden Verformungselemente ein Spannelement vorgesehen ist, vorzugsweise für das zweite Verformungselement, welches dessen Expansion senkrecht zur Kabelrichtung beim Spannen begrenzt; vorzugsweise stellt das Spannelement einen umlaufenden Begrenzungsmantel zur Verfügung, an den sich das Verformungselement im verspannten Zustand anlegt. So kann sich vorteilhafterweise der Anpressdruck auf das Kabel erhöhen lassen.

In einer bevorzugten Weiterbildung vermittelt dieses Spannelement beim Spannen des entsprechenden Verformungselements zusätzlich eine Kraft in Kabelrichtung zwischen dessen Stirnseiten, also die die Kompression des Verformungselements in Kabelrichtung bewirkende Kraft, üblicherweise im Zusammenwirken mit einem Spannbolzen. Das Spannelement kann also beispielsweise selbst eine an einer Stirnseite des Verformungselements anliegende Spannplatte oder eine Anlage für eine solche zur Verfügung stellen. Jedenfalls kann das Spannelement so vorteilhafterweise mehrere Funktionen vereinen, nämlich zum einen die Expansion senkrecht zur Kabelrichtung begrenzen und zum anderen einen Wirkeingriff, also beispielsweise ein Durchgangsloch (mit Anlagefläche darum) oder ein Gewinde, für einen Spannbolzen zur Verfügung stellen.

Besonders bevorzugt begrenzt das Spannelement die Expansion des zweiten Verformungselements und vermittelt es zugleich die diese Expansion bewirkende Kraft zwischen seinen Stirnseiten; weiter bevorzugt ist das Spannelement dann zusätzlich dazu vorgesehen, jedenfalls mittelbar eine Kraft auch auf eine Stirnseite des ersten Verformungselements zu übertragen. Vorzugsweise stellt das Spannelement also für das zweite Verformungselement eine Begrenzung senkrecht zur Kabelrichtung zur Verfügung (und vermittelt es eine Kraft zwischen dessen Stirnflächen), wobei es zusätzlich auch eine Kraft zwischen den Stirnseiten des ersten Verformungselements vermittelt.

An dem Spannelement kann also für das erste und das zweite Verformungselement jeweils eine Spannplatte ausgebildet sein oder eine Spannplatte in ihrer Relativposition zum Spannelement festgelegt anliegen; vorzugsweise stellt des Spannelement für das erste und zweite Verformungselement jeweils ein Gegenlager zur Verfügung, an dem jeweils eine Spannplatte anliegt, wobei diese Spannplatten an aneinander gegenüberliegenden Stirnseiten des ersten und zweiten Verformungselements anliegen.

Zusammenfassend ist ein "Befestigungselement" (das die Verformungselemente in ihrer Relativposition festlegt) vorzugsweise eine Kombination aus einem ersten Spannbolzen, der zum Verspannen des ersten Verformungselements vorgesehen ist, einem zweiten Spannbolzen, der zum Verspannen des zweiten Verformungselements vorgesehen ist, und einem Spannelement. Das Spannelement stellt dabei einen Wirkeingriff für den ersten und den zweiten Spannbolzen zur Verfügung und vermittelt eine Kraft zwischen den Stirnseiten des ersten und des zweiten Verformungselements. Weiter bevorzugt ist das Spannelement in einer in den vorstehenden Absätzen beschriebenen Weise ausgestaltet, weist es etwa einen Begrenzungsmantel auf.

Generell ist zum Spannen eines Verformungselements an dessen, bezogen auf die Kabelrichtung, beiden Stirnseiten beispielsweise jeweils eine Spannplatte angeordnet. Zur Kompression des Verformungselements in Kabelrichtung werden die Spannplatten aufeinander zu beweget, eben vorzugweise durch Anziehen eines Spannbolzens. Insofern (und auch generell) sind "ein" / "eine" als unbestimmte Artikel zu lesen, können also beispielsweise auch mehr Spannbolzen zum Spannen eines Verformungselements vorgesehen sein, etwa mindestens zwei, mindestens drei oder mindestens vier; bevorzugt sind zwei Spannbolzen je Verformungselement.

Im Allgemeinen kann ein Spannbolzen auch unmittelbar auf die beidseits eines Verformungselements angeordneten Spannplatten wirken, vorzugsweise ist jedoch jeweils ein ringförmiger Kraftvermittler vorgesehen (ein Spannring), der die Kraft des/der Spannbolzen umlaufend, vorzugweise vollständig umlaufend, auf die Spannplatte(n) einer Stirnseite verteilt. Ein solcher Kraftvermittler kann also als umlaufender Ring mit Eingriffen für den/die Spannbolzen vorgesehen sein. Ein Vorteil kann sich insoweit ergeben, als eine Kraftvermittler/Spannbolzen-Anordnung dann mit unterschiedlichen Spannplatten versehen für unterschiedliche Verformungselemente (mit unterschiedlicher Durchgangsöffnung beziehungsweise unterschiedlicher Anzahl Durchgangsöffnungen) eingesetzt werden kann.

Besonders bevorzugt ist das Spannelement zugleich als Kraftvermittler vorgesehen, und zwar weiter bevorzugt für sowohl das erste als auch das zweite Verformungselement, also für die zwei gegenüberliegende Stirnseiten der beiden (die distale des ersten und die proximale des zweiten Verformungselements). Vorzugsweise ist für die distale Stirnseite des zweiten Verformungselements ein eigener Kraftvermittler vorgesehen, besonders bevorzugt in Verbindung mit einem eben genannten Spannelement-Kraftvermittler.

Generell ist bevorzugt, dass sich der zum Verspannen eines Verformungselements vorgesehene Spannbolzen bezogen auf Richtungen senkrecht zur Kabelrichtung außerhalb des entsprechenden Verformungselements erstreckt, was weiter bevorzugt für sämtliche zum Spannen des entsprechenden Verformungselements vorgesehene Spannbolzen gilt und besonders bevorzugt für sämtliche Spannbolzen der Montagevorrichtung, also auch die des jeweils anderen Verformungselements bezogen auf dieses. Indem ein Spannbolzen also nicht das Verformungselement durchsetzt, steht zum einem innerhalb davon schon mehr Platz für ein Kabel zu Verfügung; anderseits kann etwa mit einem vorstehend beschriebenen Kraftvermittler die Anpresskraft gleichwohl gleichmäßig über die Spannplatte verteilt werden.

Erfindungsgemäß ist bezogen auf die Kabelrichtung zwischen den beiden Verformungselementen, wenn diese in der Relativposition am Kabel angeordnet sind, ein Luftraum vorgesehen. Es ist also etwa für jedes der Verformungselemente eine eigene Spannplatte vorgesehen, und es sind diese Spannplatten dann in Kabelrichtung zueinander beabstandet, etwa um mindestens 50 %, vorzugsweise mindestens 100 %, weiter bevorzugt mindestens 150 %, der in Kabelrichtung genommenen Dicke einer der Spannplatten (im Falle von Spannplatten unterschiedlicher Dicke eines Mittelwerts der Dicken). Der Luftraum kann insoweit Vorteile bieten, als sich die gemeinsam den Luftraum mit begrenzenden Spannplatten dann jeweils ein Stück weit in den Luftraum hinein, also aufeinander zu, verformen können, ohne dass dies die jeweils andere Spannplatte beeinträchtigt; die Verformung der Verformungselemente ist somit also besser entkoppelt.

Generell kann für das erste und/oder das zweite Verformungselement bevorzugt sein, dass eine für das Kabel vorgesehene Durchgangsöffnung mit einem Platzhalter versehen ist, etwa einem Blindstopfen aus demselben Material wie das übrige Verformungselement.

Eine bevorzugte Ausführungsform, die auch unabhänig von den Merkmalen des Hauptanspruchs als Erfindung gesehen wird und in dieser Form offenbart sein soll, betrifft ein erstes und/oder zweites Verformungselement (vorzugsweise beide), das mit einer Mehrzahl Durchgangsöffnungen für eine Mehrzahl Kabel versehen ist, also mindestens zwei, vorzugsweise mindestens drei, vier, fünf oder sechs Durchgangsöffnungen. Die Durchgangsöffnungen sind dabei mit Platzhaltern belegt, und zwar mit Platzhaltern, die aus einem anderen Material als die Verformungselemente vorgesehen sind, nämlich einem Material größerer Shore-Härte; die Shore-Härte des Platzhalters soll also beispielsweise in dieser Reihenfolge zunehmend bevorzugt um mindestens 20 %, 40 %, 60 %, 80 % beziehungsweise 100 % größer als die Shore-Härte des Materials des Verformungselements sein (mögliche Obergrenzen können beispielsweise bei 1000 %, 500 % beziehungsweise 200 % liegen).

Sind also nicht alle Durchgangsöffnungen belegt, können die beziehungsweise kann der Platzhalter in der Durchgangsöffnung verbleiben und so einem Hineinverformen des Elastomerkörpers in dieselbe vorbeugen; der Elastomerkörper verformt sich also weniger, und der Anpressdruck auf beispielweise das Kabel ist entsprechend höher. Ein "Platzhalter" soll also beim Spannen des entsprechenden Verformungselements einem Verformen desselben in die Durchgangsöffnung hinein also zumindest eine gewisse Kraft entgegensetzen, wozu der Platzhalter die Durchgangsöffnung nicht notwendigerweise vollständig ausfüllen muss. Der Platzhalter soll also eine Außenwandfläche aufweisen, an welche sich das Verformungselement beim Verspannen anlegt, und kann dabei als Hohl- oder Vollkörper vorgesehen sein.

Vorzugsweise ist der Platzhalter einstückig, besonders bevorzugt monolithisch, mit einer an einer Stirnseite des entsprechenden Verformungselements angeordneten Spannplatte ausgebildet. Es wird auf die oben stehende Definition von "monolithisch" verwiesen; "einstückig" meint aus zwar unterschiedlichen Materialien bzw. Materialien unterschiedlicher Herstellungsgeschichte, jedoch gleichwohl zusammenhängend, also aneinander angeformt, etwa durch Mehrkomponenten-Spritzguss. Für sowohl den Platzhalter als auch die Spannplatte ist eine im Vergleich zum Verformungselement härteres Material von Vorteil, wobei die monolithische Ausgestaltung vorteilhafterweise die Zahl der Einzelteile reduzieren hilft.

In einer bevorzugten Ausgestaltung ist der Platzhalter an einer Stirnseite mit einem Schrauben-Mitnahmeprofil versehen, etwa mit einem Torx-, Mehrkant-, Schlitz- beziehungsweise Kreuzschlitzprofil. Besonders bevorzugt ist für den Platzhalter dasselbe Schrauben-Mitnahmeprofil wie für den beziehungsweise die Spannbolzen vorgesehen. Jedenfalls bietet das Mitnahmeprofil einen Eingriff für ein entsprechendes Werkzeug, sodass ein Drehmoment auf den Platzhalter übertragen und dieser besser gelöst werden kann. Besonders vorteilhaft ist dies im Falle eines einstückig beziehungsweise monolithisch mit der Spannplatte ausgebildeten Platzhalters, weil dieser durch Aufbringen des Drehmoments von der Spannplatte gelöst werden kann. Generell kann auch ein Sollbruchstelie zwischen Platzhalter und Spannplatte vorgesehen sein, also etwa im Bereich verringerter Materialstärke beziehungsweise ein bereits teilweise unterbrochener Bereich.

Wir bereits einige Absätze zuvor erwähnt, wird der "Platzhalter", insbesondere auch dessen einstückige Ausgestaltung mit der Spannplatte und/oder das Schrauben-Mitnahmeprofil, auch unabhängig von den Merkmalen des Hauptanspruchs als Erfindung gesehen und soll in dieser Form offenbart sein, konkret also auch unabhängig vom Vorhandensein mindestens zweier Verformungselemente und auch unabhängig von einer Spleissmuffe, also etwa auch eine Montagevorrichtung für ein Gerätegehäuse betreffend.

Die Erfindung betrifft auch eine Spleissmuffe mit einer im Rahmen dieser Offenbarung beschrieben Montagevorrichtung. Dabei kann die Spleissmuffe beispielsweise eine Durchlassöffnung mit einer Laibung zur Verfügung stellen, an welche sich das erste Verformungselement beim Verspannen mit seiner Außenmantelfläche dichtend anlegen kann. Vorzugsweise ist die Durchlassöffnung in einem von der übrigen Spleissmuffe abnehmbaren Deckel vorgesehen; die übrige Spleissmuffe bildet dann gewissermaßen einen Topf (der von dem Deckel verschlossen wird). Die Kabel werden durch den ein- und dann in anderer Auftrennung beziehungsweise Verzweigung wieder ausgeführt.

Bevorzugt kann sein, dass die Spleissmuffe einen Eingriff für einen Spannbolzen der Montagevorrichtung zur Verfügung stellt, insbesondere für den zum verspannen des ersten Verformungselement vorgesehenen Spannbolzen (der zugleich Befestigungselement sein kann, wenn zuerst das zweite Verformungselement verspannt wird). An der Spleissmuffe kann auch der Durchlassöffnung zugeordnet eine Spannplatte oder ein Gegenlager für eine solche vorgesehen sein. Es wird also vorzugsweise ein Spannbolzen in eine entsprechende Aufnahme der Spleissmuffe gesetzt und durch Anziehen des Spannbolzens ein Spannelement (siehe die vorstehenden Erläuterungen) gegenüber der Spleissmuffe verspannt, wobei das erste Verformungselement zwischen einer relativ zur Spleissmuffe ruhenden und einer relativ zum Spannelement ruhenden Spannplatte komprimiert wird und sich infolgedessen an die Laibung der Durchlassöffnung anlegt.

Eine Spleissmuffe mit einem Eingriff für einen Spannbolzen ist auch insofern vorteilhaft, als mit diesem Spannbolzen einerseits des erste Verformungselement verspannt werden kann und andererseits zugleich ein Spannelement und damit die Montagevorrichtung gegenüber der Spleissmuffe verschraubt werden kann. Die Montagevorrichtung ist dann also nicht nur über das verspannte Verformungselement gegenüber der Spleissmuffe lagefixiert, sondern auch damit verschraubt, wobei ein Spannbolzen beide Funktionalitäten vereint (selbstverständlich kann auch wiederum eine Mehrzahl entsprechend bifunktionaler Spannbolzen vorgesehen sein).

In bevorzugter Ausgestaltung ist die Montagevorrichtung derart vorgesehen, dass auch ein zum Verspannen des zweiten Verformungselements vorgesehener zweiter Spannbolzen (und damit die entsprechende Spannvorrichtung) relativ zur Spleissmuffe verschraubt werden kann, und zwar indem der zweite Spannbolzen unmittelbar gegenüber einem Spannelement verschraubt ist, vorzugsweise in dieses greift, und das Spannelement in zuvor beschriebener Weise gegenüber der Spleissmuffe verschraubt wird, und zwar mit einem ersten Spannbolzen.

Die Erfindung betrifft auch die Verwendung einer vorliegend beschrieben Montagevorrichtung, und zwar zur Montage eines Kabels in einer Durchlassöffnung einer Spleissmuffe. Bei einer ersten bevorzugten Ausführungsform ist das Kabel eine LWL-Kabelleitung (LWL, Lichtwellenleiter) und legen sich beide Verformungselemente an die Außenmantelfläche der Kabelleitung an. Bei einer zweiten bevorzugten Ausführungsform ist das Kabel eine Kombination aus Schutzrohr und darin geführter Kabelleitung, insbesondere darin geführter LWL-Kabelleitung, wobei sich das erste Verformungselement an die Außenmantelfläche der Kabelleitung und das zweite Verformungselement an die Außenfläche des Schutzrohres anlegt.

Bevorzugt kann insbesondere eine Vormontage sein, bei welcher zuerst das zweite (distale) Verformungselement am Kabel verspannt wird, bevor die Montagevorrichtung in den Durchlass gesetzt und dann das erste Verformungselement verspannt wird. Das zweite Verformungselement kann also beispielsweise mit einem vorstehend beschrieben Spannelement verspannt werden (das eine Kraft zwischen seinen Stirnseiten vermittelt und eine seitliche Begrenzung zur Verfügung stellt), und es kann dieses Spanelement dann in eben beschriebener Weise gegenüber der Spleissmuffe verschraubt und damit das erste Verformungselement komprimiert werden.

Im Folgenden wird die Erfindung anhand von Ausführungsbeispielen näher erläutert, wobei die Merkmale auch in anderer Kombination erfindungswesentlich sein können und in dieser Form offenbart sein sollen. Es wird weiterhin nicht zwischen den Anspruchskategorien unterschieden.

Im Einzelnen zeigt
- Figur 1: eine erfindungsgemäße Montagevorrichtung in einer schematischen Schnittdarstellung;
- Figur 2: eine Spannplatte mit Platzhaltern.

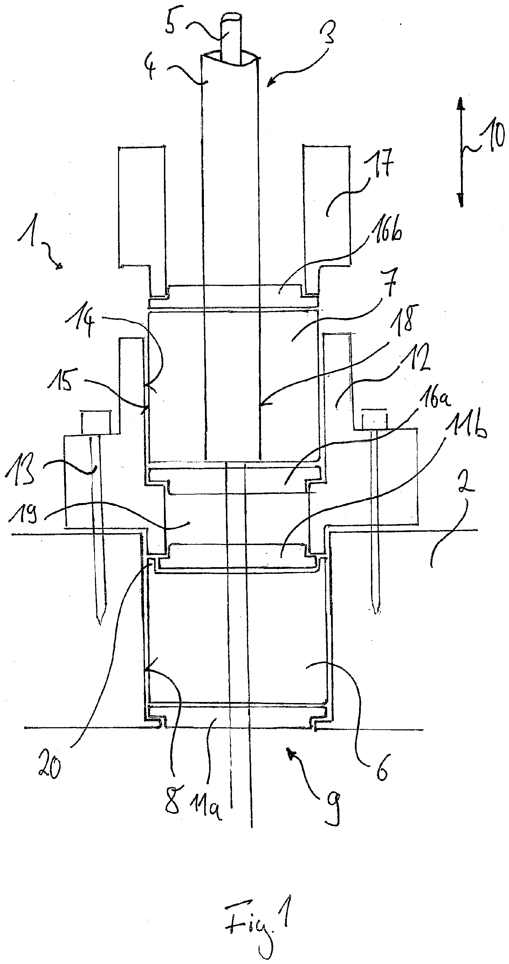

Figur 1 zeigt eine erfindungsgemäße Montagevorrichtung 1 die in den Deckel 2 einer (ansonsten nicht dargestellten) Spleissmuffe gesetzt ist und gegen ein in die Spleissmuffe geführtes Kabel 3 dichtet, nämlich eine in einem Schutzrohr 4 geführte LWL-Kabelleitung 5 (eine Lichtwellenleiter-Kabelleitung).

Für die erfindungsgemäße Montagevorrichtung 1 sind zwei Verformungselemente vorgesehen, nämlich ein erstes Verformungselement 6 aus Silikon und ein zweites Verformungselement 7 aus EPDM. Nach dem Verspannen des ersten Verformungselements 6 liegt dieses dicht an der Kabelleitung 5 und der Laibung 8 der Durchlassöffnung 9 im Deckel 2 an.

Zum Verspannen des ersten Verformungselements 6 ist an dessen bezogen auf die Kabelrichtung 10 beiden Stirnseiten jeweils eine Spannplatte 11 angeordnet, wobei die eine Spannplatte 11a ein Gengenlager am Deckel 2 hat und die andere Spannplatte 11b ein Gegenlager am Spannelement 12.

Das Spannelement 12 ist von zwei Schraubbolzen 13 durchsetzt, die jeweils in ein komplementäres Innengewinde im Deckel 2 greifen. Durch das Gegenlager ist die Spannplatte 11b gegenüber dem Spannelement 12 in ihrer Relativposition festgelegt, wird sie also mit dem Spannelement 12 beim Anziehen der Spannbolzen 13 in Richtung der anderen, an der entgegengesetzten Stirnseite anliegenden Spannplatte 11a bewegt. Mit den Spannbolzen 13 wird also vorteilhafterweise zum einen die Montagevorrichtung 1 mit dem Deckel 2 verschraubt und zum anderen zugleich das erste Verformungselement 6 verspannt.

Weiterhin ist an dem Spannelement 12 ein sich in Kabelrichtung 10 erstreckender, hülsenförmig umlaufender Abschnitt vorgesehen, der eine umlaufende Innenmantelfläche 14 zur Verfügung stellt, an die sich das zweite Verformungselement 7 beim Verspannen mit einer Außenmantelfläche 15 anlegt. Das Spannelement 12 begrenzt also die Verformung des zweiten Verformungselements 7 senkrecht zur Kabelrichtung 10.

Zugleich stellt das Spannelement 12 ein Gegenlager für eine an einer Stirnseite des zweiten Verformungselements 7 anliegenden Spannplatte 16a zur Verfügung (die also gegenüber dem Spannelement 12 in ihrer Relativposition festgelegt ist). An der entgegengesetzten Stirnseite des zweiten Verformungselements 7 ist eine weitere Spannplatte 16b angeordnet, die mit einem Spannring 17 in Richtung der anderen Spannplatte 16a bewegt werden kann, wobei sich das zweite Verformungselement 7 dichtend an die Innenmantelfläche 14 und die Außenmantelfläche 18 des Schutzrohres 4 anlegt.

Der Spannring 17 ist mit Schraubbolzen gegenüber dem Spannelement 12 verschraubt, wird also von Schraubbolzen durchsetzt, die in komplementäre Eingriffe mit Innengewinde im Spannelement 12 greifen. Die Spannbolzen zwischen Spannring 17 und Spannelement 12 sind gegenüber den Spannbolzen 13 zwischen Spannelement und Deckel 2 um 90° verdreht (bezogen auf einen Umlauf um die Kabelrichtung 10), liegen also gewissermaßen vor- und hinterhalb der Zeichenebene. Der Übersichtlichkeit halber sind sie nicht gezeigt.

Zwischen den einander zugewandten Stirnseiten der beiden Verformungselemente 6, 7 ist ein Luftraum 19 vorgesehen, die Spannplatten 11b, 16a grenzen also nicht unmittelbar aneinander, sondern sind zueinander beabstandet. So hat jede der Spannplatten 11b, 16a ein wenig Spiel, kann sich also beim Verspannen ein Stück weit in Kabelrichtung 10 wölben, ohne dass dies die jeweils andere Spannplatte beeinträchtigt. Der Luftraum 19 ist druckfluidisch mit dem Inneren des Schutzrohres 4 verbunden, die Spannplatte 16a ist also nicht zur Kabelleitung 5 hin gedichtet.

Darüberhinaus ist der Luftraum 19 jedoch abgedichtet, und zwar zum einen durch die Anlage der Außenmantelfläche 15 des zweiten Verformungselements 7 an der Innenmantelfläche 14 des Spannelements 12 und zum anderen durch eine dichtende Anlage des ersten Verformungselements 6 am Spannelement 12. Dazu ist das erste Verformungselement 6 an der dem Spannelement 12 zugewandten Stirnseite mit einem umlaufenden Kragen 20 versehen, der nach dem Verspannen dichtend am Spannelement 12 anliegt.

Alternativ wäre auch eine einstückige Ausgestaltung der Spannplatte 11b mit dem Spannelement 12 denkbar, allerdings ist beim vorliegenden Konzept die Modularität erhöht, es können nämlich mit demselben Spannelement 12 unterschiedliche Verformungselemente, etwa mit einer unterschiedlichen Anzahl Durchgangsöffnungen oder einer unterschiedlichen Anordnung derselben, mit jeweils darauf angepasst unterschiedlichen Spannplatten gedichtet werden.

Ist die Spleissmuffe gut zugänglich, also noch nicht im Erdreich vergraben, kann beispielsweise auch zunächst das erste Verformungselement 6 verspannt und anschließend das zweite Verformungselement 7 verspannt werden. Dabei würden die (nicht gezeigten) Spannbolzen zwischen Spannring 7 und Spannelement 12 die Montagevorrichtung 1 beisammenhalten, auch wenn das zweite Verformungselement 7 noch nicht verspannt ist.

Andererseits ist auch eine Vormontage möglich, kann also die Montagevorrichtung 1 soweit möglich am Kabel 3 vormontiert und dann in einem letzen Schritt mit den Spannbolzen 13 gegenüber dem Deckel 2 verschraubt werden, wobei zugleich das erste Verformungselement 6 verspannt wird. Es wird in diesem Fall also zunächst das zweite Verformungselement 7 gegenüber dem Schutzrohr 4 verspannt, was auch außerhalb eines Erdlochs und damit in einem gut zugänglichen Bereich geschehen kann. Das erste Verformungselement 6 sitzt dabei noch locker auf der Kabelleitung 5 und wird dann gemeinsam mit dem bereits verspannten zweiten Verformungselement 7 zur Spleissmuffe geführt und in die Durchlassöffnung 9 im Deckel 2 gesetzt. Mit dem Einsetzen und ersten Andrehen der Schraubbolzen 13 sind die beiden Verformungselemente 6, 7 dann in ihrer Relativposition festgelegt, noch bevor das erste Verformungselement 6 verspannt wird.

Die beiden Verformungselemente 6, 7 unterscheiden sich sowohl im Durchmesser der jeweiligen Durchgangsöffnung - der eine ist an das Schutzrohr 4 und der andere an die Kabelleitung 5 angepasst -, als auch im jeweiligen Material. Das zweite Verformungselement 7 aus EPDM hat eine Shore-Härte von circa 40 Shore, und das erste Verformungselement 6 eine Shore-Härte von circa 28 Shore.

Damit kann das zweite Verformungselement 7 gegebenenfalls etwas mehr Kräfte aufnehmen, kann es also das Schutzrohr 4, das dann im Erdreich verläuft und auf welches somit potenziell größere Kräfte wirken, sicher halten. Andererseits stellt das erste Verformungselement 6 aus Silikon eine gute Abdichtung zum Inneren der Spleissmuffe her, und zwar auch bei Temperaturen unter dem Gefrierpunkt.

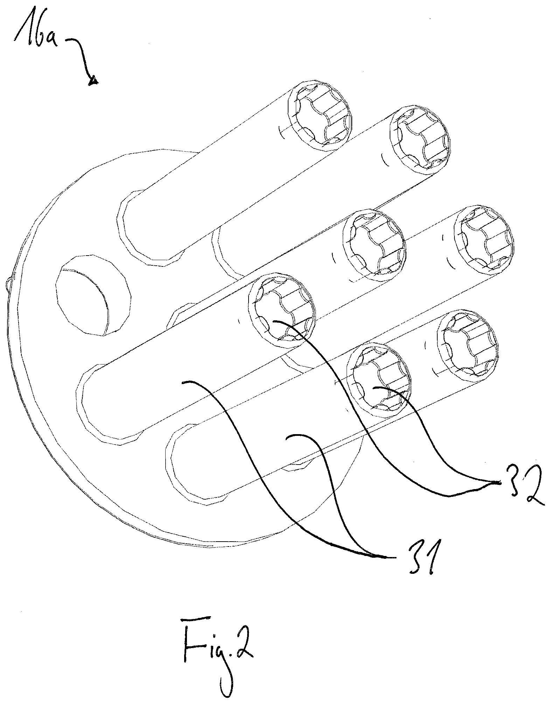

Figur 2 zeigt allein die Spannplatte 16a mit Platzhaltern 31 in einer Schrägansicht, also ohne das erste Verformungselement 7 und die übrigen Teile der Montagevorrichtung 1. Die Platzhalter 31 sind monolithisch mit dem Spannplatte 16a ausgebildet, also aus demselben Material in einem Schritt spritzgegossen. Die Platzhalter 31 sind im Vergleich zum ersten Verformungselement 7 also eher steif und begrenzen so dessen Verformung in die nicht belegten Durchgangsöffnungen hinein.

Das erste Verformungselement 7 weist ja eine Vielzahl Durchgangsöffnungen auf, durch die potenziell Kabel hindurchgeführt werden können, wobei die Durchgangsöffnungen hinsichtlich ihrer Anzahl, Anordnung und jeweiligen Abmessung den Platzhaltern 31 entsprechen. Wird eine Durchgangsöffnung (zunächst) nicht mit einem Kabel belegt, hält sie der entsprechende Platzhalter 31 verschlossen.

Soll ein Kabel hindurchgeführt werden, kann der entsprechende Platzhalter 31 durch Drehen von der Spannplatte 16a abgetrennt, also eine Materialbrücke dazwischen aufgebrochen werden. Dazu ist endseitig im Platzhalter ein Schrauben-Mitnahmeprofil 32 angeordnet, nämlich ein Torx-Profil.

## Patentansprüche

1. Montagevorrichtung (1) für eine Spleissmuffe, zur Montage eines durch einen Durchlass (9) der Spleissmuffe geführten Kabels (3),
welche Montagevorrichtung aufweist:
ein erstes verspannbares Verformungselement (6) und
ein zweites verspannbares Verformungselement (7), das dazu vorgesehen ist, in Kabelrichtung (10) komprimiert zu werden, um sich in Richtungen senkrecht dazu dichtend an das Kabel (3) anzulegen,
wobei das erste Verformungselement (6) für eine Anordnung am Kabel proximal der Spleissmuffe vorgesehen ist und das zweite Verformungselement (7) für eine Anordnung am selben Kabel (3), demselben Durchlass (9) zugeordnet, in Kabelrichtung (10) auf das erste Verformungselement (6) folgend, vorgesehen ist
und wobei die Montagevorrichtung (1) derart vorgesehen ist, dass die beiden Verformungselemente (6, 7) im verspannten Zustand in einer Relativposition zueinander am Kabel (3) festgelegt sind, und zwar auch unabhängig von ihrer jeweiligen dichtenden Anlage am Kabel (3),
wobei das erste, für die Anordnung proximal der Spleissmuffe vorgesehene Verformungselement (6) dazu vorgesehen ist, in Kabelrichtung (10) komprimiert zu werden, um sich in Richtungen senkrecht dazu dichtend an das Kabel anzulegen,
**dadurch gekennzeichnet, dass** das erste (6) und das zweite Verformungselement (7) derart ausgelegt und angeordnet sind, dass in der Relativposition am Kabel ein Luftraum (19) zwischen dem ersten Verformungselement (6) und dem zweiten Verformungselement (7) vorliegt,
nämlich für jedes der Verformungselemente (6,7) eine eigene Spannplatte (11b, 16a) vorgesehen ist und diese Spannplatten (11b, 16a) in Kabelrichtung (10) zueinander beabstandet sind.

2. Montagevorrichtung (1) nach Anspruch 1, bei welcher das Kabel (3) ein Schutzrohr (4) mit einer darin geführten Kabelleitung (5) ist, wobei das zweite Verformungselement (7) dazu vorgesehen ist, gegen eine Außenmantelfläche (18) am Ende des Schutzrohres (4) zu dichten, und das erste Verformungselement (6) dazu vorgesehen ist, gegen die Kabelleitung (5) zu dichten, wobei die beiden Verformungselemente (6, 7) solchermaßen zueinander gedichtet sind, dass das Ende des Schutzrohres (4) gedichtet ist.

3. Montagevorrichtung (1) nach Anspruch 1 oder 2, bei welcher das erste Verformungselement (6) aus einem ersten Verformungselementmaterial vorgesehen ist und das zweite Verformungselement (7) aus einem zweiten Verformungselementmaterial, wobei die beiden Verformungselementmaterialien eine unterschiedliche Shore-Härte haben, vorzugsweise das erste Verformungselementmaterial eine geringere.

4. Montagevorrichtung (1) nach einem der vorstehenden Ansprüche, bei welcher als Teil des Befestigungselements, mittels welchem die Verformungselemente (6, 7) in der Relativposition am Kabel (3) festgelegt werden können, ein sich in Kabelrichtung (10) erstreckender Befestigungselement-Spannbolzen (13) ist, vorzugsweise ein Befestigungselement-Schraubbolzen (13).

5. Montagevorrichtung (1) nach Anspruch 4, bei welcher der Befestigungselement-Spannbolzen (13) zugleich zum Spannen von zumindest einem der Verformungselemente (6, 7) vorgesehen ist, sodass durch Anziehen des Befestigungselement-Spannbolzens (13) das zumindest eine Verformungselement (6, 7) in Kabelrichtung (10) komprimiert wird.

6. Montagevorrichtung (1) nach einem der vorstehenden Ansprüche, bei welcher für zumindest einen der beiden Verformungselemente (6, 7) ein Spannelement (12) vorgesehen ist, welches die Expansion des entsprechenden Verformungselements (6, 7) senkrecht zur Kabelrichtung (10) begrenzt, wobei das Spannelement (12) beim Spannen des entsprechenden Verformungselements (6, 7) vorzugsweise zusätzlich eine Kraft in Kabelrichtung (10) zwischen dessen Stirnseiten vermittelt.

7. Montagevorrichtung (1) nach einem der vorstehenden Ansprüche, bei welcher zum Spannen von zumindest einem der Verformungselemente (6, 7) ein Spannbolzen (13) vorgesehen ist, der sich bezogen auf Richtungen senkrecht zur Kabelrichtung (10) außerhalb des zumindest einen der Verformungselemente (6, 7) erstreckt.

8. Montagevorrichtung (1) nach einem der vorstehenden Ansprüche, bei welcher in zumindest einem von dem Verformungselement und dem zweiten Verformungselement eine Mehrzahl Durchgangsöffnungen für eine Mehrzahl Kabel vorgesehen sind, wobei die Durchgangsöffnungen mit Platzhaltern belegt sind, die aus einem anderen Material als das entsprechende Verformungselement vorgesehen sind, nämlich einem Material größerer Shore-Härte.

9. Montagevorrichtung (1) nach Anspruch 8, bei welcher das entsprechende Verformungselement an einer seiner Stirnseiten mit einer Spannplatte (11, 16) versehen ist, wobei die Platzhalter (31) monolithisch mit der Spannplatte (11, 16) ausgebildet sind.

10. Montagevorrichtung (1) nach Anspruch 8 oder 9, bei welcher die Platzhalter (31) jeweils stirnseitig mit einem Schrauben-Mitnahmeprofil (32) versehen sind, sodass mit einem entsprechenden Werkzeug ein Drehmoment zum Herauslösen übertragbar ist.

11. Spleissmuffe mit einer Montagevorrichtung (1) nach einem der vorstehenden Ansprüche.

12. Verwendung einer Montagevorrichtung (1) nach einem der Ansprüche 1 bis 10 für eine Spleissmuffe, nämlich zur Montage eines Kabels (3), vorzugsweise eines LWL-Kabels, insbesondere eines Schutzrohres (4) mit einer darin geführten Kabelleitung (5), vorzugsweise einer darin geführten LWL-Kabelleitung.

13. Verwendung nach Anspruch 12, bei welcher zur Montage der Montagevorrichtung (1) an einem Kabel (3) zuerst das zweite Verformungselement (7) am Kabel (3) verspannt wird, bevor das erste Verformungselement (6) in den Durchlass (9) gesetzt und verspannt wird.

14. Verfahren zur Montage einer Montagevorrichtung (1) nach einem der Ansprüche 1 bis 10 an einer Spleissmuffe zum Einführen eines Kabels (3) in diese, wobei zuerst das zweite Verformungselement (7) am Kabel verspannt wird, bevor das erste Verformungselement (6) in den Durchlass (9) gesetzt und verspannt wird.

## Claims

1. A mounting device (1) for a splice sleeve, for mounting a cable (3) led through a passage (9) of said splice sleeve,
said mounting device comprising:
a first tensionable deformation member (6) and
a second tensionable deformation member (7) adapted for being compressed in a cable direction (10) for contacting said cable (3) sealingly in directions perpendicularly thereto,
wherein said first deformation member (6) is provided for a placement at said cable proximal to said splice sleeve and said second deformation member (7) is provided for a placement at the same cable (3), assigned to the same passage (9), following on said first deformation member (6) in said cable direction (10),
and wherein said mounting device (1) is provided such that the two deformation members (6, 7) have, when being in a tensioned state, a defined relative position to each other at said cable (3), namely also independently of their respective sealing contact to said cable (3),
wherein said first deformation member (6) provided for the placement proximal to said splice sleeve is adapted for being compressed in said cable direction (10), for contacting said cable sealingly in directions perpendicularily thereto,
**characterized in that** said first (6) and said second deformation member (7) are provided and placed such that, in said relative position at said cable, an air gap (19) is present between said first deformation member (6) and said second deformation member (7),
namely an own tensioning plate (11b, 16a) is provided for each of said deformation members (6, 7) and the tensioning plates (11b, 16 a) are spaced from each other in said cable direction (10).

2. The mounting device (1) according to claim 1, wherein said cable (3) is a protective tube (4) in which a cable line (5) is guided, wherein said second deformation member (7) is adapted for sealing against an outer lateral surface (18) at the end of said protective tube (4) and said first deformation member (6) is adapted for sealing against said cable line (5), wherein said two deformation members (6, 7) are sealed against each other such that said end of said protective tube (4) is sealed.

3. The mounting device (1) according to claim 1 or 2, wherein said first deformation member (6) is made of a first deformation member material and said second deformation member (7) is made of a second deformation member material, wherein the two deformation member materials have a different Shore hardness, said first deformation member material having preferably a lower one.

4. The mounting device (1) according to one of the preceding claims, wherein a mounting element tensioning bolt (13) extending in said cable direction (10) is provided as a part of the mounting element by which said deformation members (6, 7) can be fixed in said relative position at said cable (3), the mounting element tensioning bolt (13) being preferably a threaded bolt (13).

5. The mounting device (1) according to claim 4, wherein said mounting element tensioning bolt (13) is also provided for tensioning at least one of said deformation members (6, 7) so that said at least one deformation member (6, 7) is compressed in said cable direction (10) by tensioning said mounting element tensioning bolt (13).

6. The mounting device (1) according to one of the preceding claims, wherein a tensioning element (12) is provided for at least one of said two deformation members (6, 7), which limits the expansion of the corresponding deformation member (6, 7) perpendicularly to said cable direction (10), said tensioning element (12) transmitting preferably in addition a force in said cable direction (10), between the front faces of the corresponding deformation members (6, 7) when the latter is tensioned.

7. The mounting device (1) according to one of the preceding claims, wherein a tensioning bolt (13) for tensioning at least one of said deformation members (6, 7) is provided, said tensioning bolt (13) extending outside of the at least one deformation member (6, 7) with respect to directions perpendicular to said cable direction (10).

8. The mounting device (1) according to one of the preceding claims, wherein a plurality of through holes for a plurality of cables are provided in at least one of said first deformation member and said second deformation member, wherein dummies are provided in said through holes, which are made of another material than the corresponding deformation member, namely a material having a higher Shore hardness.

9. The mounting device (1) according to claim 8, wherein a tensioning plate (11, 16) is provided at one of the front faces of the corresponding deformation member, wherein said dummies (31) are provided monolithically with said tensioning plate (11, 16).

10. The mounting device (1) according to claim 8 or 9, wherein said dummies (31) are provided with a screw profile (32) at their front sides respectively so that a torque can be applied with a corresponding tool to achieve a loosening.

11. Splice sleeve with a mounting device (1) according to one of the preceding claims.

12. Use of a mounting device (1) according to one of claims 1 - 10 for a splice sleeve, namely for mounting a cable (3), preferably a fiber optic cable, in particular a protective tube (4) with a cable line (5) guided therein, preferably a fiber optic cable line (5) guided therein.

13. The use according to claim 12, wherein, for mounting said mounting device (1) at a cable (3), said second deformation member (7) is tensioned at said cable (3) before said first deformation member (6) is placed in said passage (9) and tensioned.

14. Method for mounting a mounting device (1) according to one of claims 1 - 10 at a splice sleeve for leading a cable (3) into the latter, wherein, first, said second deformation member (7) is tensioned at said cable before said first deformation member (6) is placed in said passage (9) and tensioned.

## Revendications

1. Dispositif de montage (1) pour un manchon d'épissurage, destiné au montage d'un câble (3) traversant un passage (9) du manchon d'épissurage, lequel dispositif de montage présente :
un premier élément déformable (6) blocable, et
un deuxième élément déformable (7) blocable, prévu pour être comprimé dans le sens du câble (10) afin de s'appliquer sur le câble (3) de façon étanche dans des directions perpendiculaires à celui-ci ;
ledit premier élément déformable (6) étant prévu pour être disposé sur le câble à proximité du manchon d'épissurage et ledit deuxième élément déformable (7) étant prévu pour être disposé sur ce même câble (3), en étant associé au même passage (9), en succédant au premier élément déformable (6) dans le sens du câble (10),
et ledit dispositif de montage (1) étant prévu de manière que les deux éléments déformables (6, 7) soient fixés au câble (3), à l'état bloqué, dans une position relative l'un par rapport à l'autre, et ce également indépendamment de leur disposition étanche par rapport au câble (3),
ledit premier élément déformable (6) prévu pour être disposé à proximité du manchon d'épissurage étant prévu pour être comprimé dans le sens du câble (10) afin de s'appliquer sur le câble de façon étanche dans des directions perpendiculaires à celui-ci ;
**caractérisé en ce que** le premier (6) et le deuxième (7) élément déformable sont conçus et disposés de manière que, dans la position relative sur le câble, un espace d'air (19) soit présent entre le premier élément déformable (6) et le deuxième élément déformable (7),
à cet effet une plaque de serrage (11b, 16a) est respectivement prévue pour les éléments déformables (6, 7), et ces plaques de serrage (11b, 16a) sont espacées l'une de l'autre dans le sens du câble (10).

2. Dispositif de montage (1) selon la revendication 1, dans lequel le câble (3) est un tuyau de protection (4) parcouru par un câblage (5) intérieur, le deuxième élément déformable (7) étant prévu pour assurer l'étanchéité contre la surface d'une enveloppe extérieure (18) à l'extrémité du tuyau de protection (4), et le premier élément déformable (6) est prévu pour assurer l'étanchéité contre le câblage (5), lesdits deux éléments déformables (6, 7) étant assemblés de manière étanche l'un à l'autre de manière que l'extrémité du tuyau de protection (4) est étanchée.

3. Dispositif de montage (1) selon la revendication 1 ou 2, dans lequel le premier élément déformable (6) est réalisé dans un premier matériau et le deuxième élément déformable (7) dans un deuxième matériau, les deux matériaux présentant une dureté Shore différente, le premier matériau présentant de préférence la plus faible des deux.

4. Dispositif de montage (1) selon l'une des revendications précédentes, dans lequel un boulon de serrage formant élément de fixation (13) s'étendant dans le sens du câble (10), de préférence un boulon vissable formant élément de fixation (13), fait partie de l'élément de fixation permettant de fixer les éléments déformables (6, 7) dans la position relative sur le câble (3).

5. Dispositif de montage (1) selon la revendication 4, dans lequel le boulon de serrage formant élément de fixation (13) est également prévu pour le serrage d'au moins un des éléments déformables (6, 7) de manière que, sous l'effet du serrage du boulon de serrage formant élément de fixation (13), l'au moins un élément déformable (6, 7) se trouve comprimé dans le sens du câble (10).

6. Dispositif de montage (1) selon l'une des revendications précédentes, dans lequel il est prévu un élément de serrage (12) pour au moins un des deux éléments déformables (6, 7) afin de limiter l'expansion de l'élément déformable (6, 7) correspondant perpendiculairement au sens du câble (10) ; ledit élément de serrage (12), lors du serrage de l'élément déformable (6, 7) correspondant, assurant de préférence en outre une force dans le sens du câble (10) entre ses faces frontales.

7. Dispositif de montage (1) selon l'une des revendications précédentes, dans lequel un boulon de serrage (13) est prévu pour serrer au moins un des éléments déformables (6, 7) en se prolongeant hors de l'au moins un des éléments déformables (6, 7) par rapport à des directions perpendiculaires au sens du câble (10).

8. Dispositif de montage (1) selon l'une des revendications précédentes, dans lequel dans au moins un des éléments déformables parmi le premier élément déformable et le deuxième élément déformable, il est prévu une pluralité d'ouvertures de passage pour une pluralité de câbles, lesdites ouvertures de passage étant occupées par des substituts réalisés dans un autre matériau que celui de l'élément déformable correspondant, à savoir un matériau de dureté Shore supérieure.

9. Dispositif de montage (1) selon la revendication 8, dans lequel l'élément déformable correspondant est pourvu d'une plaque de serrage (11, 16) sur une de ses faces frontales, les substituts (31) étant conçus de façon monolithique avec la plaque de serrage (11, 16).

10. Dispositif de montage (1) selon la revendication 8 ou 9, dans lequel les substituts (31) sont chacun pourvus sur leur face frontale d'une empreinte de vis (32), de manière qu'un outil correspondant puisse transmettre un couple de torsion pour les détacher.

11. Manchon d'épissurage doté d'un dispositif de montage (1) selon l'une des revendications précédentes.

12. Utilisation d'un dispositif de montage (1) selon l'une des revendications 1 à 10 pour un manchon d'épissurage, à savoir pour le montage d'un câble (3), de préférence un câble à fibre optique, notamment un tuyau de protection (4) parcouru par un câblage (5) intérieur, de préférence un câblage à fibre optique intérieur.

13. Utilisation selon la revendication 12, dans lequel, pour le montage du dispositif de montage (1) sur un câble (3), le deuxième élément déformable (7) est tout d'abord bloqué sur le câble (3) avant que le premier élément déformable (6) soit installé dans le passage (9) et bloqué.

14. Procédé de montage d'un dispositif de montage (1) selon l'une des revendications 1 à 10 sur un manchon d'épissurage destiné à l'introduction d'un câble (3) dans celui-ci, le deuxième élément déformable (7) étant tout d'abord bloqué sur le câble avant que le premier élément déformable (6) soit installé dans le passage (9) et bloqué.
